**Europäisches Patentamt**

**European Patent Office**

**Office européen des brevets**

(19)

(11) **EP 1 426 332 A1**

(12) **EUROPÄISCHE PATENTANMELDUNG**

(43) Veröffentlichungstag:
**09.06.2004 Patentblatt 2004/24**

(51) Int Cl.7: **C01B 17/38**, B01J 2/16

(21) Anmeldenummer: **03022121.2**

(22) Anmeldetag: **30.09.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK** | (72) Erfinder:<br>• **Alt, Hans Christian**<br>  **63571 Geinhausen-Meerholz (DE)**<br>• **Gölz, Andreas**<br>  **63517 Rodenbach (DE)**<br>• **Alig, Alfred**<br>  **63826 Geiselbach-Omersbach (DE)** |
| (30) Priorität: **04.12.2002 DE 10256530** | |
| (71) Anmelder: **Degussa AG**<br>**40474 Düsseldorf (DE)** | |

(54) **Verfahren zur Herstellung von wasserfreiem Alkalisulfid**

(57)     Die Erfindung betrifft ein Verfahren und eine Vorrichtung zur Herstellung von wasserfreiem Alkalisulfid, wobei man wasserhaltiges Alkalisulfid durch eine Wirbelschicht-Sprühgranulation trocknet.

**EP 1 426 332 A1**

Printed by Jouve, 75001 PARIS (FR)

## Beschreibung

Die Erfindung betrifft ein Verfahren zur Herstellung von wasserfreiem Alkalisulfid.

In trockenem Zustand und fein verteilt können Alkalisulfide bei erhöhter Temperatur mit Luft reagieren, woraus erhebliche Gefahrenpotentiale und Produktverluste bei der thermischen Trocknung resultieren. Dies stellt eine hohe verfahrenstechnische und sicherheitstechnische Hürde beim Betreiben eines derartigen Prozesses dar.

Aus EP 0 924 165 A1 ist die Herstellung von wasserfreiem Alkalisulfid, ausgehend vom kristallwasserhaltigen Feststoff, mittels Vakuumkontakttrocknung bekannt.

Ferner ist aus WO 01/255146 die konvektive Sprühtrocknung von wasserfreien Alkalisulfiden mittels heißen, wasserfreien Inertgasen bekannt.

Aus Uhlemann, Chem.-Ing.-Tech. 62 (1990) S. 822-834 ist eine Übersicht über bekannte Verfahren und Vorrichtungen zur kontinuierlichen Wirbelschicht-Sprühgranulation bekannt.

Nachteil der bekannten Verfahren zur Herstellung von wasserfreiem Alkalisulfid ist der schlechte Wärme- und Stoffaustausch und die Bildung eines staubenden Produktes.

Aufgabe der Erfindung ist es, ein Verfahren zur Verfügung zu stellen, bei dem ein wasserfreies, nicht staubendes, granulatförmiges Produkt entsteht und ein besserer Wärmeund Stoffaustausch als bei den bekannten Verfahren erfolgt.

Gegenstand der Erfindung ist ein Verfahren zur Herstellung von wasserfreiem Alkalisulfid, welches dadurch gekennzeichnet ist, dass man wasserhaltiges Alkalisulfid mittels einer Wirbelschicht-Sprühgranulation trocknet.

Als wasserhaltiges Alkalisulfid kann $Na_2S$ *x $H_2O$ ($3 \leq x \leq 9$) verwendet werden. Das wasserhaltige Alkalisulfid kann als Schmelze, Suspension, Dispersion oder Lösung in den Verfahrensraum eingebracht werden.

Die Alkalisulfidlösung, Alkalisulfidsuspension, Alkalisulfiddispersion oder Alkalisulfidkristallwasserschmelze kann in den Verfahrensraum mit einem Feststoffanteil von 10 % < $x_{TS}$ < 95 %, bevorzugt 20 % < $x_{TS}$ < 70 %, besonders bevorzugt 40 % < $x_{TS}$ < 70 %, eingebracht werden. Die Alkalisulfidlösung kann eine Lösung von Alkalisulfid in Wasser sein.

Bei dem Wirbelschicht-Sprühgranulationsverfahren können in dem Verfahrensraum neu gebildete oder von außen zusätzlich in den Verfahrensraum eingebrachte Feststoff-Partikel durch einen Fluidisierungsgasstrom in einem Wirbelbett fluidisiert werden. Der Verfahrensraum kann auf einer Seite, vorzugsweise unten, durch einen gasdurchlässigen Boden, durch den das Fluidisierungsgas einströmt, begrenzt werden. Das Fluidisierungsgas kann durch vorgeschaltete Prozessstufen in seiner Beschaffenheit so eingestellt werden, dass es ein Potenzial zum Kühlen oder Trocknen aufweist. Des weiteren können das Fluidisierungsgas oder Teile davon gewünschte chemische Reaktionen mit den gebildeten Feststoffen oder den eingespeisten Lösungsmitteln eingehen.

Die Fluidisierungsgeschwindigkeit, die aus dem Fluidisierungsgasstrom resultiert, kann vorzugsweise so gewählt werden, dass der Lockerungspunkt der vorhandenen Festkörperschüttung überschritten wird und ein ständiger Platzwechsel der Feststoffpartikeln ermöglicht wird. Dieser ständige Platzwechsel kann eine gleichmäßige Auftreffwahrscheinlichkeit der eingesprühten Tröpfchen bewirken. Die dem System zu- oder abgeführte Energiemenge kann proportional zum Fluidisierungsgasstrom sein. Zur Steigerung des Durchsatzes des Verfahrens kann der Fluidisierungsgasstrom erhöht werden. Solange die Fluidisierungsgeschwindigkeit kleiner als die Austragsgeschwindigkeit der Partikel ist, kann sich ein stabiles Wirbelbett ausbilden. Die Fluidisierungsgeschwindigkeit kann jedoch weiter erhöht werden, um den Energieein- oder austrag weiter zu steigern. In dem Verfahrensraum können Schmelzen, Suspensionen, Dispersionen oder Lösungen von Alkalisulfiden versprüht werden, deren Tröpfchen sich auf den fluidisierten Partikeln niederschlagen und auf deren Oberfläche verteilen. Durch Wärmeübergang vom Gasstrom zu den feuchten Partikeln kann das Lösungsmittel verdunsten, wobei der gelöste, dispergierte oder suspendierte Feststoff in einer dünnen Schicht auf dem Partikel zurückbleibt. Es kann so zu einem schalenweisen Aufbau von Feststoffmaterial auf der Oberfläche der Partikeln kommen. Das beschriebene Partikelwachstum kann von den Stoffeigenschaften, wie zum Beispiel Feststoffdichte, Klebeneigung und Wirbelverhalten beeinflusst und durch geeignete Wahl der Prozessparameter reproduzierbar gesteuert werden.

Das Fluidisierungsgas kann ein erhitztes sauerstofffreies Inertgas, das beim Passieren der Wirbelschicht verdampfendes Lösungsmittel aufnimmt und aus dem Prozess trägt, sein. Das Fluidisierungsgas kann Stickstoff, Helium, Argon oder eine Mischung der genannten Gase sein.

Das Fluidisierungsgas kann innerhalb des Verfahrensraumes eine Temperatur von 250°C bis 800°C besitzen.

Das Versprühen der Lösung, Suspension, Dispersion oder Schmelzen kann mit Düsen erfolgen, durch die gleichzeitig ein oder mehrere Stoffe durchgeleitet werden. Diese können als Druckdüsen oder als pneumatische Zerstäuber ausgeführt sein. Im Fall von Druckdüsen können lediglich die unter Druck stehenden Lösungen, Suspensionen, Dispersionen oder Schmelzen des zu granulierenden Stoffes versprüht werden. Werden hingegen pneumatische Zerstäuber eingesetzt, so können zusätzlich zu den flüssigen Stoffen von Lösungen, Suspensionen, Dispersionen oder Schmelzen Zerstäubergas und Düsenreinigungsgas versprüht werden. Die technische Ausführung der Düsen oder die Eindüsrichtung in den Wirbelschichtraum kann prinzipiell frei gewählt werden und ist produktabhängig. Die Anzahl der Stoffe die maximal durch eine Düse geleitet werden können, soll keinesfalls limitierend für die Granulation von Alkalisulfiden sein. Das eingesetzte Hilfsgas zur Zerstäubung kann ein sauerstofffreies Inertgas sein. Vorzugsweise kann im Kreisgasbetrieb ein Teilstrom des Kreisgases eingesetzt werden.

Ein Granulatteilstrom kann kontinuierlich oder diskontinuierlich aus der Granulationswirbelschicht entnommen, gegebenenfalls gekühlt und nach Bedarf unter Schutzgasatmosphäre gelagert oder abgefüllt werden. Die Granulation kann auch batchweise durchgeführt werden.

Das Abgas kann im Betrieb mit einem stabilen Wirbelbett nach Verlassen der Wirbelschicht einen Feinstaubanteil mit sich führen, der in geeigneter Weise abgeschieden, beispielsweise durch Filter oder Zyklone, und ins Wirbelbett zurückgeführt werden kann. Die weitgehende Staubabscheidung kann oberhalb der Wirbelschicht in dem Wirbelschicht-Sprügranulator selbst oder außerhalb des Sprühgranulators in einem geeigneten externen Abscheider erfolgen. Werden zur Staubabscheidung Oberflächenfilter mit Druckstoßabreinigung eingesetzt, so kann die Abreinigung mit jedem sauerstofffreien Gas, vorzugsweise aber mit vorgewärmten Inertgas oder einem Teilstrom des Fluidisierungsgases, erfolgen.

Das erfindungsgemäße Verfahren kann bei Überdruck, Normaldruck oder Unterdruck durchgeführt werden. Ein bevorzugter Verfahrensdruckbereich kann dann gegeben sein, wenn mit dem Fluidisierungsgas, bei maximal zulässiger Systemtemperatur, spezifikationsgerechtes Granulat bei maximaler Kapazität erzeugt wird. Da ein Sauerstoffeinbruch in das System vermieden werden muss, kann die Anlage vorzugsweise im Normaldruck oder leichtem Überdruck von $\Delta p=0$ bis 200 mbar über Umgebungsdruck betrieben werden.

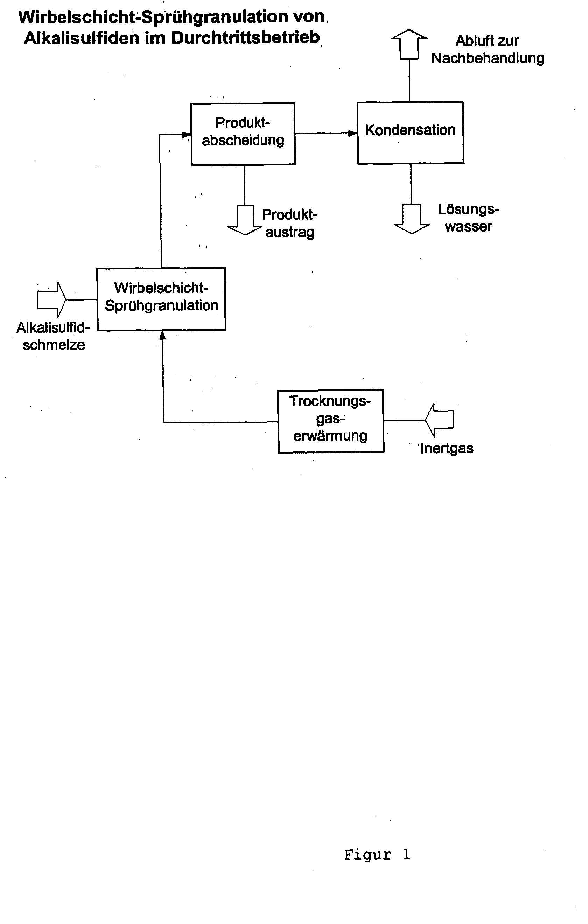

Das erfindungsgemäße Verfahren kann im Durchtrittsbetrieb gemäß Figur 1 betrieben werden.

Im Durchtrittsbetrieb kann als Fluidisierungsgas Inertgas erwärmt werden. Vorzugsweise kann das Fluidisierungsgas ein sauerstoffarmes, mit kleiner 0,1 Vol.-%, bevorzugt kleiner 0,05 Vol.-%, Sauerstoff oder sauerstofffreies Gas sein. Die Fluidisierungsgaserhitzer können elektrisch, mit Dampf oder mit Wärmeträgermedien betrieben werden. Zum wirtschaftlichen Betreiben der Trocknungsanlage kann eine Kombination der Fluidisierungsgaserhitzer zweckmäßig sein. Das Fluidisierungsgas kann dann zum Versprühen der Alkalisulfidlösung, Alkalisulfidsuspension, Alkalisulfiddispersion oder Alkalisulfidkristallwasserschmelze in die Wirbelschichtgranulationsapparatur eingesetzt werden.

Das Tockengas kann die Kammer mit einer Gasgeschwindigkeit, die ausreicht, die Partikelschüttung mindestens zu fluidisieren oder sogar teilweise getrocknete oder agglomerierte Teilchen pneumatisch auszutragen, durchströmen.

Die vom Trockengasstrom geförderten Teilchen können aus dem Gasstrom abgetrennt und gegebenenfalls zumindest teilweise wieder zurückgeführt werden (Feinstaubrückführung). Die Teilchen mit einer Größe innerhalb des gewünschten Teilchengrößenbereiches können, vorzugsweise kontinuierlich, aus der Kammer ausgetragen werden, sodass die in der Kammer befindliche Masse konstant bleibt.

Das Lösungsmittel kann kondensiert und die Abluft nachbehandelt werden.

Im Durchtrittsbetrieb wird stets frisches Fluidisierungsgas in den Verfahrens raum geleitet und das aus dem Verfahrensraum austretende Abgas verworfen.

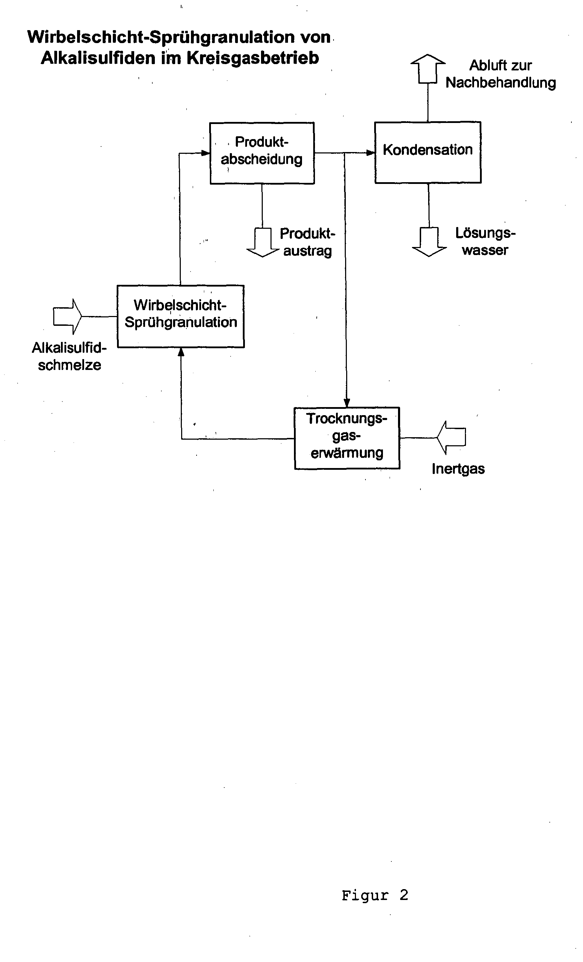

Das erfindungsgemäße Verfahren kann im Kreisgasbetrieb gemäß Figur 2 betrieben werden, bei dem das Abgas rezykliert und durch Energiezufuhr so konditioniert werden kann, dass es wiederum als Fluidisierungsgas eingesetzt werden kann. Bei der Konditionierung kann dem Abgas die im Verfahrensraum verdampften Flüssigkeitsbestandteile teilweise wieder entzogen werden, sodass diese ebenfalls rezykliert werden können. Möglichst vollständige Kreisgasführung mit Ausschleusung der überschüssigen Lösungsmittel und Inertgase ist unter wirtschaftlichen Aspekten anzustreben. Im Kreisgasbetrieb kann das eingesetzte reine Inertgas sukzessive mit den Lösemitteldämpfen angereichert werden. Nach einiger Zeit kann sich eine Gleichgewichtszusammensetzung des Fluidisierungsgases einstellen, die durch den Anteil an zusätzlich eingebrachtem Inertgas und durch den Anteil der verdampfenden Lösungsmittel bestimmt wird.

Das wasserdampfhaltige Abgas kann verworfen oder vorzugsweise der Wasserdampf kondensiert werden. Das Gas kann erneut zum Einsatz als Fluidisierungsgas aufbereitet werden.

Bei dem bevorzugten Verfahren gemäß Figur 2 - Vermeidung der weiteren Einspeisung von Inertgasen in den laufenden Prozess - kann die Trocknung im stationären Betrieb in reinem überhitztem Wasserdampf erfolgen, wobei die in dem Verfahrensraum versprühte Wassermenge ausgeschleust werden kann. Das wasserdampfhaltige Abgas kann verworfen oder vorzugsweise der Wasserdampf kondensiert werden. Das Gas kann erneut zum Einsatz als Fluidisierungsgas aufbereitet werden. Der Einsatz von Inertgasen kann im stationären Prozess weitgehend, vorzugsweise vollständig, vermieden werden und so eine Trocknung und Granulation in nahezu reinem, überhitztem Wasserdampf durchgeführt werden. Eine Nachbehandlung des möglicherweise geruchsbelasteten Abgases kann bei dieser Fahrweise vollständig entfallen.

Das mit dem erfindungsgemäßen Verfahren hergestellte wasserfreie Alkalisulfid, kann einen Restwassergehalt von kleiner 10 Gew.-%, vorzugsweise kleiner 3 Gew.%, besonders bevorzugt kleiner 2 Gew.%, enthalten.

Die mit dem erfindungsgemäßen Verfahren hergestellten wasserfreien Alkalisulfide können Alkalisulfid-Granulate sein. Die mit dem erfindungsgemäßen Verfahren hergestellten Granulate können einen Mittelwert der Partikelgrößenverteilung von 100 µm bis 30 mm besitzen. Die Granulate können annähernd sphärische, massive Feststoffpartikel sein. Zum Start des Granulationsvorgangs kann eine inerte Startfüllung, beispielsweise Quarzsand, eingesetzt werden. Diese inerte Startfüllung kann als Träger, auf die das Alkalisulfid aufgebracht wird, dienen.

Im Batch-Betrieb kann eine Teilmenge des auf diese Weise erzeugten Granulates erneut als Startfüllung eingesetzt werden. Dadurch kann das inerte Material der ursprünglichen Startfüllung nach und nach ausgeschleust werden. Dabei kann ein Zusammenhang zwischen der resultierenden Granulatgröße und dem Massenverhältnis von Startfüllung und aufgebrachtem Alkalisulfid bestehen.

Im kontinuierlichen Betrieb kann die inerte Startfüllung sukzessive ausgeschleust werden.

Durch den vorzugsweisen Verzicht auf den Einsatz von Inertgasen im stationären Betrieb kann kein schadstoffhaltiges Abgas entstehen, das aufwendig zu reinigen wäre.

Das erfindungsgemäße Verfahren hat den Vorteil, dass es einen höheren Wärme- und Stoffaustausch als das bekannte Sprühtrocknungsverfahren und somit eine höhere Leistungsfähigkeit aufweist. Das erfindungsgemäße Verfahren kann zu granulären, nicht staubenden Produkten mit wesentlich besseren Handhabungseigenschaften, wie beispielsweise niedrigerem Gefährdungspotenzial, führen.

Ein weiterer Gegenstand der Erfindung ist eine Vorrichtung zur Durchführung des erfindungsgemäßen Verfahrens, die aus folgenden Bestandteilen besteht:

- eine Granulatorkammer mit einem Durchmesser-Höhe-Verhältnis von 1:1 bis 1:5, die einen Anströmboden aufweist,
- ein in dieser Kammer angeordnetes Zerstäubungsorgan für die Schmelzen, Suspensionen, Dispersionen oder Lösungen,
- ein Zuführorgan für das Fluidisierungs- und Trocknungsmedium,
- eine im oberen Teil der Kammer angeordnete Austragsöffnung für die zu rezyklierenden Feinstäube oder Partikel,
- ein Feststoffabscheidesystem, das über diese Austragsöffnung mit der Kammer verbunden ist, und das ein gegebenenfalls mit der Filtereinheit versehenes Abluftrohr zur Abführung des Gasstromes aufweist,
- eine Rückführung für die zu rezyklierenden Feinstäube und Produkte, die ausgehend von der Austragsöffnung in dem unteren Teil der Kammer mündet,
- ein Sichter, der am unteren Teil der Kammer angeordnet ist,
- eine Rückgewinnungsanlage des Lösungsmittels aus dem Abgasstrom
- eine Rezyklierungs- und Konditionierungs-Apparatur zur mindestens teilweisen Rezyklierung und Konditionierung des Abgases zum erneuten Einsatz als Fluidisierungsgas (Kreisgasfahrweise).

Beispiele:

In einem Glasbehälter wird bei einer Temperatur von 120 °C $Na_2S * 3H_2O$ aufgeschmolzen. Die resultierende Schmelze besitzt einen Wasseranteil von ca. 41 %. Für die Förderung der Schmelze zum Trockner wird eine Zahnradpumpe eingesetzt. Die Verdüsung der Schmelze in den Trockner erfolgt mit einer Zweistoffdüse (Modell Schlick 970-S4) mit einem Düsendurchmesser von 1,2 mm. Die Düse wird bei einem Gasdruck von 3 bar mit einem Zerstäubungsgasdurchsatz von 4,5 m$^3$/h betrieben.

Der verwendete Wirbelschicht-Granulator besteht aus einer Trocknungskammer mit einem Durchmesser von 190 mm und einer Höhe von 370 mm. Der Boden der Trocknungskammer fungiert als Gasverteiler. Die Rückführung von Feinstaub in die Wirbelschicht erfolgt über einen Zyklon und einen Filter. Zur weiteren Reinigung des Abgasstromes wird ein mit Wasser betriebener Wäscher eingesetzt.

Die Erwärmung des Trocknungsgases erfolgt mit einem elektrischen Gaserhitzer. Als Trocknungsgas werden Stickstoff und Wasserdampf aus dem Leitungsnetz eingesetzt. Der Wasserdampf wird von 10 bar auf Atmosphärendruck entspannt, durch einen Kondensatabscheider geleitet und anschließend überhitzt. Das Trocknungsgas wird mit einer Temperatur von bis zu 400 °C in die Trocknungskammer geleitet.

In der Trocknungskammer befindet sich eine Startfüllung, auf welche die Schmelze aufgesprüht wird. Die Startfüllung besteht aus 500 g Quarzsand mit einer Partikelgröße von 200 - 350 µm. Durch den Wärmeeintrag des Trocknungsgases verdampft das Lösungsmittel (Kristallwasser). Die Trocknung findet bei einer Abgastemperatur zwischen 150 und 250 °C statt, wobei der Mengenstrom der Schmelze die Austrittstemperatur des Trocknungsgases regelt. Der aus der Trocknungskammer austretende Gasstrom passiert den Zyklon und den Filter, wo mitgerissene Partikel abgeschieden werden.

Der Betrieb erfolgt Batch-weise, das trockene Produkt wird nach Versuchsende aus der Wirbelschicht entnommen.

Die Partikelgröße des Produktes liegt bei ca. 300 - 550 µm. Die aufgesprühte Natriumsulfid-Masse entspricht etwa 1.500 g. Größere Partikel entstehen durch Teilen der Produktmenge und Wiederverwendung als Startfüllung. Dadurch wird auch der Quarzsand letztlich ausgeschleust.

Die Bestandteile der Apparatur sind aus Glas und aus Edelstahl gefertigt.

In Tabelle 1 sind die Einstellungsparameter und die Restfeuchte angegeben.

Tabelle 1

| Parameter | Einheit | Beispiel 1 | Beispiel 2 | Beispiel 3 |
|---|---|---|---|---|
| Trocknungsgasstrom | m³/h | 100 | | |
| Düsentreibgas | m³/h | 4,5 | | |
| Medium | | Stickstoff | Stickstoff | Wasserdampf |
| Eintrittstemperatur | °C | 300 | 400 | 400 |
| Abgastemperatur | °C | 150 | 250 | 250 |
| Restfeuchte | % | 7,5 | 1,5 | 2,5 |

Die angegebenen Restfeuchten beziehen sich nur auf Natriumsulfid, die inerte Startfüllung wird herausgerechnet.
Die Beispiele des erfindungsgemäßen Verfahrens zeigen eine Restfeuchte unter 10 Gew.-%. Das erhaltene Natriumsulfid, hergestellt mit dem erfindungsgemäßen Verfahren, ist nicht staubend und granulatförmig.

Bestimmung der Restfeuchte

19,5 g $Na_2S*xH_2O$ wird im 1000 ml Meßkolben eingewogen, in voll entsalztem Wasser gelöst und der Kolben bis zur Eichmarke aufgefüllt. Von dieser Lösung werden entweder genau 10 ml abpipettiert oder 10,0 g auf der Präzisionswaage in einen 300 ml Erlenmeyerkolben mit Schliff eingewogen und mit ca. 90 ml voll entsalztem Wasser aus einem Meßzylinder verdünnt. Mit dem Metrohm Dosimat wird unter leichtem Rühren mit einem Magnetrührer 60 ml Iodlösung (0,05 mol/Liter) hineinpipettiert, dabei wird die Lösung durch ausfallenden Schwefel mit der Zeit trüb und später durch den Überschuß an Iodlösung braun gefärbt. Da es sich bei der Iodometrie um eine Zeitreaktion handelt bleibt die Reaktionslösung 15 Minuten bei Raumtemperatur stehen und wird in dieser Zeit zwischendurch häufiger geschüttelt. Die Aufbewahrung während dieser Zeit erfolgt im geschlossenen Kolben und nach Möglichkeit im Dunkeln, da Iod flüchtig ist beziehungsweise durch Lichteinstrahlung Iodid zu Iod oxidiert wird.
Nach dieser Reaktionszeit wird das überschüssige Iod mit einer 0,1 n Natriumthiosulfatlösung titriert. Bei der Titration wird zunächst soviel Normallösung zugesetzt, bis die Lösung von vorhandenem Iod gerade noch braun gefärbt ist. Nach Zusatz von 2 ml Stärkelösung (blaue Farbe), wird bis zum Farbumschlag weiter titriert und die verbrauchte Menge Thiosulfat-Lösung notiert. Von jeder gelösten Probe wird eine Dreifachbestimmung durchgeführt.

Berechnung:

Das Natriumsulfid reagiert mit Iod im Molverhältnis 1:1. Für die Titration von 10,0 g einer $Na_2S$-Lösung aus 19,5 g $Na_2S$ (100%ig) in 1000 ml $H_2O$ wird genau 50,0 ml einer Iodlösung mit c = 0,05 mol/Liter verbraucht. Bei einer Vorlage von 60,0 ml Iodlösung müssen noch 10,0 ml mit 10,0 ml Natriumthiosulfatlösung c = 0,1 mol/Liter zurücktitriert werden. Über den Mehrverbrauch an Natriumthiosulfatlösung wird nun der Wirkstoffanteil und dann der Wassergehalt des eingesetzten $Na_2S$ nach folgender Formel berechnet:

$$\frac{(V(I_2)-V(Na_2S_2O_3)) *0,05 \text{ mol/l} *M(Na_2S)}{\text{Einwaage } Na_2S \text{ [g]}} *100*100 = \text{Wirkstoffgehalt in Gew. \%}$$

$V(I_2) =$          Volumen vorgelegte Iodlösung in Liter
$V(Na_2S_2O_3) =$          Verbrauch an Natriumthiosulfatlösung in Liter
$M(Na_2S) =$          Molmasse von Natriumsulfid in g/Mol
$m(Na_2S) =$          Einwaage der $Na_2S$-Probe in g
Restfeuchte in Gew.-% =   100 - Wirkstoffgehalt in Gew.-%.

**Patentansprüche**

**1.**   Verfahren zur Herstellung von wasserfreiem Alkalisulfid,

**dadurch gekennzeichnet,**
**dass** man wasserhaltiges Alkalisulfid mittels einer Wirbelschicht-Sprühgranulation trocknet.

2. Verfahren zur Herstellung von wasserfreiem Alkalisulfid gemäß Anspruch 1,
**dadurch gekennzeichnet,**
**dass** man bei Normaldruck oder leichtem Überdruck von $\Delta p=0$ bis 200 mbar über Umgebungsdruck trocknet.

3. Verfahren zur Herstellung von wasserfreiem Alkalsulfid gemäß Anspruch 1,
**dadurch gekennzeichnet,**
**dass** man das Fluidisierungsgas im Kreis führt und Überschußwasserdampf durch Kondensation abgasfrei ausschleust.

4. Vorrichtung zur Durchführung des Verfahrens gemäß Anspruch 1,
**dadurch gekennzeichnet,**
**dass** sie aus den folgenden Bestandteilen besteht:

- eine Granulatorkammer mit einem Durchmesser-Höhe-Verhältnis von 1:1 bis 1:5, die einen Anströmboden aufweist,
- ein in dieser Kammer angeordnetes Zerstäubungsorgan für die Schmelzen, Suspensionen, Dispersionen oder Lösungen,
- ein Zuführorgan für das Fluidisierungs- und Trocknungsmedium,
- eine im oberen Teil der Kammer angeordnetete Austragsöffnung für die zu rezyklierenden Feinstäube oder Partikel,
- ein Feststoffabscheidesystem, das über diese Austragsöffnung mit der Kammer verbunden ist, und das ein gegebenenfalls mit der Filtereinheit versehenes Abluftrohr zur Abführung des Gasstromes aufweist,
- eine Rückführung für die zu rezyklierenden Feinstäube und Produkte, die ausgehend von der Austragsöffnung in dem unteren Teil der Kammer mündet,
- ein Sichter, der am unteren Teil der Kammer angeordnet ist,
- eine Rückgewinnungsanlage des Lösungsmittels aus dem Abgasstrom
- eine Rezyklierungs- und Konditionierungs-Apparatur zur mindestens teilweisen Rezyklierung und Konditionierung des Abgases zum erneuten Einsatz als Fluidisierungsgas (Kreisgasfahrweise).

**Wirbelschicht-Sprühgranulation von Alkalisulfiden im Durchtrittsbetrieb**

Figur 1

## Wirbelschicht-Sprühgranulation von Alkalisulfiden im Kreisgasbetrieb

Figur 2

**Europäisches Patentamt**

**EUROPÄISCHER RECHERCHENBERICHT**

Nummer der Anmeldung

EP 03 02 2121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X <br> Y | US 3 849 233 A (BLJUMBERG A ET AL) <br> 19. November 1974 (1974-11-19) <br> * Spalte 1, Zeile 15-47 * <br> * Spalte 2, Zeile 1-38 * <br> --- | 1,2 <br><br> 3 | C01B17/38 <br> B01J2/16 |
| D,Y | WO 01 25146 A (PPG IND OHIO INC) <br> 12. April 2001 (2001-04-12) <br> * Seite 9, Zeile 24 - Seite 11, Zeile 10 * <br> * Seite 12, Zeile 17 - Seite 13, Zeile 22; <br> Abbildung 1 * <br> --- | 3,4 | |
| Y | GB 1 026 329 A (DOW CHEMICAL CO) <br> 20. April 1966 (1966-04-20) <br> * Seite 1, Zeile 39-82 * <br> * Seite 2, Zeile 5-95 * <br> * Abbildung * <br> --- | 4 | |
| Y | US 6 296 790 B1 (LANGSETH BIRGER ET AL) <br> 2. Oktober 2001 (2001-10-02) <br> * Spalte 1, Zeile 33-49 * <br> * Spalte 2, Zeile 39-50 * <br> * Spalte 3, Zeile 1-34; Abbildung 1 * <br> --- | 4 | RECHERCHIERTE SACHGEBIETE (Int.Cl.7) <br><br> C01B <br> B01J <br> F26B |
| Y | US 3 475 132 A (CHEN LUNG PAO ET AL) <br> 28. Oktober 1969 (1969-10-28) <br> * das ganze Dokument * <br> --- | 4 | |
| Y | US 3 316 309 A (HANS-JOACHIM MANN ET AL) <br> 25. April 1967 (1967-04-25) <br> * Spalte 2, Zeile 20-45 * <br> * Abbildung * <br> ----- | 4 | |

Der vorliegende Recherchenbericht wurde für alle Patentansprüche erstellt

| Recherchenort | Abschlußdatum der Recherche | Prüfer |
|---|---|---|
| MÜNCHEN | 27. Januar 2004 | Besana, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**　　　EP 03 02 2121

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2004

| Im Recherchenbericht angeführtes Patentdokument | Datum der Veröffentlichung | Mitglied(er) der Patentfamilie | Datum der Veröffentlichung |
|---|---|---|---|
| US 3849233 A | 19-11-1974 | KEINE | |
| WO 0125146 A | 12-04-2001 | AU 7864000 A<br>WO 0125146 A2 | 10-05-2001<br>12-04-2001 |
| GB 1026329 A | 20-04-1966 | DE 1265715 B | 11-04-1968 |
| US 6296790 B1 | 02-10-2001 | NO 964350 A<br>AU 710413 B2<br>AU 4577597 A<br>CA 2263567 A1<br>CN 1232410 A ,B<br>KR 2000035809 A<br>WO 9816306 A1<br>RU 2167816 C2 | 14-04-1998<br>23-09-1999<br>11-05-1998<br>23-04-1998<br>20-10-1999<br>26-06-2000<br>23-04-1998<br>27-05-2001 |
| US 3475132 A | 28-10-1969 | CH 431576 A<br>DE 1592672 A1<br>FR 1419500 A<br>GB 1076583 A<br>NL 6500137 A | 15-03-1967<br>04-02-1971<br>18-02-1966<br>19-07-1967<br>08-07-1965 |
| US 3316309 A | 25-04-1967 | DE 1208887 B<br>BE 655767 A<br>CH 444485 A<br>FR 1412987 A<br>GB 1019486 A<br>NL 6411707 A<br>NO 116521 B<br>SE 320354 B | 13-01-1966<br>01-03-1965<br>30-09-1967<br>01-10-1965<br>09-02-1966<br>17-05-1965<br>08-04-1969<br>09-02-1970 |

Für nähere Einzelheiten zu diesem Anhang : siehe Amtsblatt des Europäischen Patentamts, Nr.12/82